# EUROPEAN PATENT APPLICATION

(11) **EP 4 848 450 A1**
(43) Date of publication of application: **02.12.2026**
(21) Application number: 25895398.3
(22) Date of filing: 07.11.2025
(51) Int. Cl.: H01M 50/383, H01M 50/289, H01M 10/658, H01M 50/204

(54) **BATTERY CELL ASSEMBLY AND BATTERY PACK COMPRISING SAME**

(30) Priority: 25.11.2024 KR 20240169390
(71) Applicant: LG Energy Solution, Ltd., Seoul 07335 (KR)
(72) Inventor: KIM, Kwang Mo, Daejeon 34122 (KR); JUNG, Hye Mi, Daejeon 34122 (KR); LEE, Jung Hoon, Daejeon 34122 (KR); LEE, Joo Hyoung, Daejeon 34122 (KR)
(74) Representative: BCKIP Part mbB
(86) International application number: PCT/KR2025/018267
(87) International publication number: WO 2026/111272

(57) **Abstract**

According to exemplary embodiments of the present disclosure, a battery cell assembly is provided. The battery cell assembly may include: a plurality of battery cells; a barrier pad between the plurality of battery cells; and an adhesive layer in contact with the barrier pad below the plurality of battery cells, wherein the adhesive layer is configured to increase a distance between the plurality of battery cells when temperature rises from a first temperature to a second temperature higher than the first temperature.

## Description

### [Technical Field]

The present disclosure relates to a battery cell assembly and a battery pack including the same.

This application claims the benefit of Korean Patent Application No. 10-2024-0169390, filed on November 25, 2024, the disclosure of which is incorporated herein by reference.

### [Background]

Unlike primary batteries, secondary batteries are capable of being charged and discharged a plurality of times. Secondary batteries are widely used as energy sources for various wireless devices such as handsets, laptops, and cordless vacuum cleaners. Recently, due to improvements in energy density and economies of scale, the manufacturing cost per unit capacity of secondary batteries has dramatically decreased, and the driving range of battery electric vehicles (BEVs) has increased to a level comparable to that of fuel-powered vehicles. As a result, the primary use of secondary batteries is shifting from mobile devices to mobility applications.

The trend in technological development of secondary batteries for mobility applications is the improvement of energy density and safety. The safety of secondary batteries for mobility is critically important as it is directly related to the lives of passengers. The safety of secondary batteries can be achieved through mechanical robustness, reliability of electrical insulation, and delay of heat transfer when a thermal runaway event occurs.

### [Summary]

### [Technical Problem]

A technical object of the present disclosure is to provide a battery cell assembly with improved performance and reliability.

A technical object of the present disclosure is to provide a battery cell assembly with enhanced safety.

A technical object of the present disclosure is to provide a battery pack with improved performance and reliability.

A technical object of the present disclosure is to provide a battery pack with enhanced safety.

### [Technical Solution]

According to exemplary embodiments of the present disclosure for solving the aforementioned technical problems, a battery cell assembly is provided. The battery cell assembly may include: a plurality of battery cells; a barrier pad between the plurality of battery cells; and an adhesive layer in contact with the barrier pad below the plurality of battery cells, wherein the adhesive layer is configured to increase a distance between the plurality of battery cells when temperature rises from a first temperature to a second temperature higher than the first temperature.

The barrier pad may be configured to expand in volume when the temperature rises from the first temperature to the second temperature, thereby increasing the distance between the plurality of battery cells.

As the barrier pad expands in volume, the adhesive layer in contact therewith may be also configured to expand.

The adhesive layer has elasticity such that its shape may change under an external force.

The adhesive layer may be a silicone-based resin.

The plurality of battery cells may include a first battery cell and a second battery cell arranged in a first direction, the adhesive layer may include a first point overlapping the first battery cell in a second direction crossing the first direction, and a second point overlapping the second battery cell in the second direction, the battery cell assembly has a first distance in the first direction between the first point and the second point at the first temperature, the battery cell assembly has a second distance in the first direction between the first point and the second point at the second temperature, and the second distance may be greater than the first distance.

The plurality of battery cells includes a first battery cell and a second battery cell arranged in a first direction, the barrier pad is disposed between the first battery cell and the second battery cell, and a first thickness of the barrier pad in the first direction at the first temperature may be less than a second thickness thereof in the first direction at the second temperature.

The first temperature is less than 90°C, and the second temperature may be equal to or greater than 90°C and equal to or less than 150°C.

According to exemplary embodiments of the present disclosure for solving the aforementioned problems, a battery cell assembly may be provided. The battery cell assembly comprises: a case for accommodating a plurality of battery cells therein;
the plurality of battery cells on a bottom part of the case; a barrier pad between the plurality of battery cells; and an adhesive layer between the plurality of battery cells and the bottom part, wherein the adhesive layer has elasticity such that its shape may change under an external force.

The adhesive layer may be configured to expand in volume when temperature rises, thereby increasing a distance between the plurality of battery cells.

The barrier pad is configured to expand in volume when temperature rises, increasing a distance between the plurality of battery cells, and as the barrier pad expands in volume, the adhesive layer in contact therewith may be also configured to expand.

### [Advantageous Effects]

According to exemplary embodiments of the present disclosure, a battery cell assembly may include a barrier pad disposed between a plurality of battery cells and an elastic adhesive layer disposed in contact therewith. Accordingly, when the temperature rises due to a thermal runaway event or the like, the barrier pad expands in volume, and the change in shape of the elastic adhesive layer increases the distance between the plurality of battery cells, thereby delaying heat transfer.

According to exemplary embodiments of the present disclosure, a battery cell assembly with enhanced safety can be provided.

According to exemplary embodiments of the present disclosure, a battery cell assembly with improved performance and reliability can be provided.

According to exemplary embodiments of the present disclosure, a battery pack with enhanced safety can be provided.

According to exemplary embodiments of the present disclosure, a battery pack with improved performance and reliability can be provided.

The effects that can be obtained from the exemplary embodiments of the present disclosure are not limited to the effects mentioned above, and other effects not mentioned can be clearly derived and understood by one having ordinary knowledge in the technical field to which the exemplary embodiments of the present disclosure belong from the following description. In other words, unintended effects of practicing the exemplary embodiments of the present disclosure can also be derived from the exemplary embodiments of the present disclosure by one having ordinary knowledge in the technical field.

### [Brief Description of the Drawings]

FIG. 1 is a diagram for explaining a battery cell assembly according to exemplary embodiments of the present disclosure.
FIG. 2 is an exploded perspective view of a battery cell for explaining a battery cell assembly according to exemplary embodiments of the present disclosure.
FIG. 3 is an enlarged view for explaining a battery cell assembly according to exemplary embodiments of the present disclosure.
FIG. 4 is a diagram for explaining a battery cell assembly according to exemplary embodiments of the present disclosure.
FIG. 5 is an enlarged view for explaining a battery cell assembly according to exemplary embodiments of the present disclosure.
FIG. 6 is a diagram for explaining a battery cell assembly according to exemplary embodiments of the present disclosure.
FIG. 7 is a diagram for explaining a battery cell assembly according to exemplary embodiments of the present disclosure.
FIG. 8 is a diagram of a battery pack according to exemplary embodiments of the present disclosure.

### [Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

### (First embodiment)

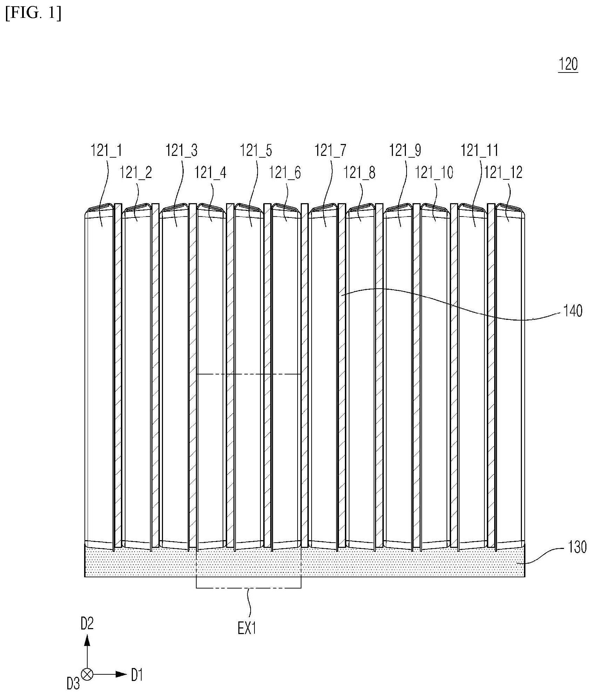

FIG. 1 is a diagram for explaining a battery cell assembly 120 according to exemplary embodiments of the present disclosure.

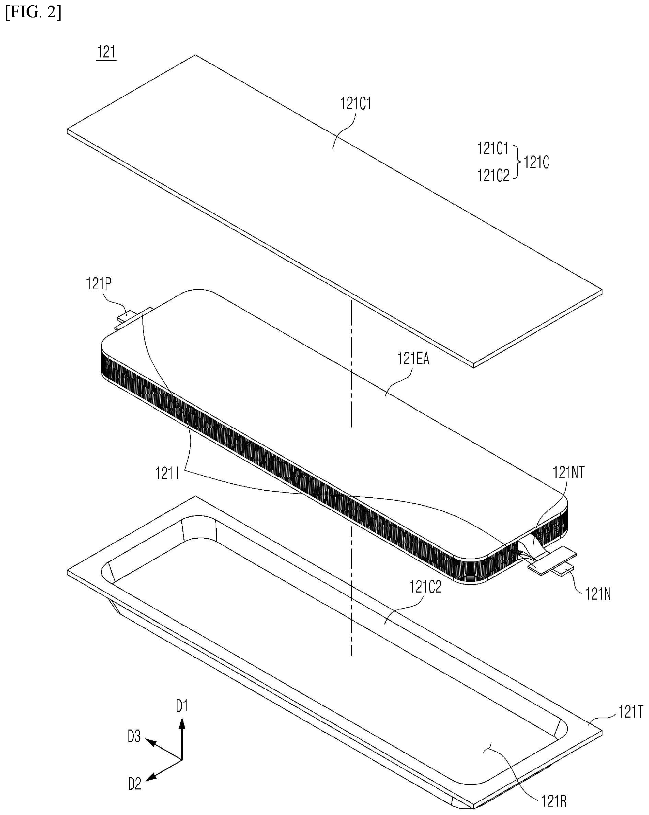

FIG. 2 is an exploded perspective view of a battery cell 121 for explaining a battery cell assembly 120 according to exemplary embodiments of the present disclosure.

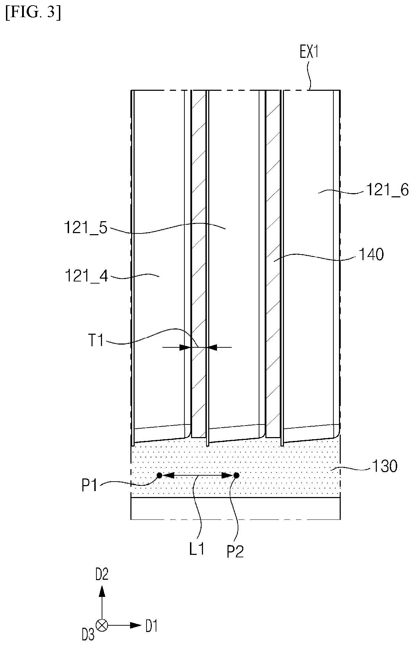

FIG. 3 is an enlarged view for explaining a battery cell assembly 120 according to exemplary embodiments of the present disclosure. Specifically, FIG. 3 illustrates a first state of the battery cell assembly 120 and is an enlarged view of region EX1 in FIG. 1.

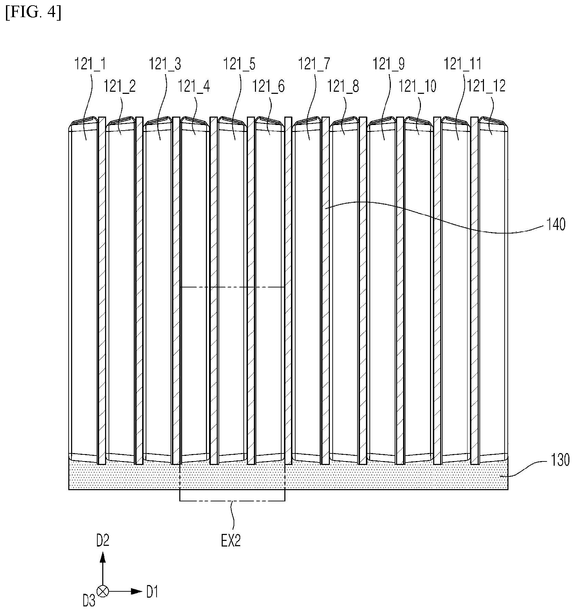

FIG. 4 is a diagram for explaining a battery cell assembly 120 according to exemplary embodiments of the present disclosure. Specifically, FIG. 4 illustrates a second state of the battery cell assembly 120 shown in FIG. 1.

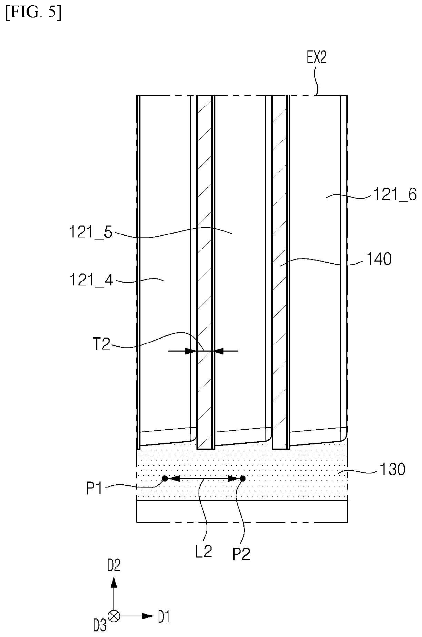

FIG. 5 is an enlarged view for explaining a battery cell assembly 120 according to exemplary embodiments of the present disclosure. Specifically, FIG. 5 illustrates the second state of the battery cell assembly 120 and is an enlarged view of region EX2 in FIG. 4.

Referring to FIG. 1, the battery cell assembly 120 may include a plurality of battery cells 121_1, 121_2, 121_3, 121_4, 121_5, 121_6, 121_7, 121_8, 121_9, 121_10, 121_11, and 121_12 (hereinafter 121_1~121_12).

In embodiments, the plurality of battery cells 121_1~121_12 may be arranged in a first direction D1. The plurality of battery cells 121_1~121_12 may be coupled, for example, by an adhesive.

In embodiments, a barrier pad 140 may be disposed between the plurality of battery cells 121_1~121_12. Specifically, a barrier pad 140 may be disposed between two adjacent battery cells among the plurality of battery cells 121_1~121_12. The barrier pad 140 may overlap with the plurality of battery cells 121_1~121_12 in the first direction D1.

In embodiments, an adhesive layer 130 may be disposed below the plurality of battery cells 121_1~121_12. The adhesive layer 130 may overlap with the plurality of battery cells 121_1~121_12 in the second direction D2. The adhesive layer 130 may be in contact with the plurality of battery cells 121_1~121_12. The adhesive layer 130 may overlap with the barrier pad 140 in the second direction D2. The second direction D2 may cross the first direction D1. The adhesive layer 130 may be in contact with the barrier pad 140.

Referring together to FIG. 2, the battery cell 121 may include a case 121C, an electrode assembly 121EA, a positive terminal 121P, and a negative terminal 121N. The battery cell 121 may further include an electrolyte. The battery cell 121 may refer to each of the plurality of battery cells 121_1~121_12 of FIG. 1

. According to exemplary embodiments, the battery cell 121 may include one of a cylindrical battery cell, a prismatic battery cell, and a pouch-type battery cell. The electrode assembly of a cylindrical battery cell is embedded in a cylindrical metal can. The electrode assembly of a prismatic battery cell is embedded in a prismatic metal can. The electrode assembly of a pouch-type battery cell is embedded in a pouch case including an aluminum laminate sheet. Hereinafter, the technical idea of the present disclosure is described based on an example in which the battery cell 121 includes a pouch-type battery cell; however, those skilled in the art will readily be able to arrive at an example in which the battery cell 121 includes one of a cylindrical battery cell and a prismatic battery cell based on what is described herein.

The electrode assembly 121EA may include a positive electrode, a negative electrode, and a separator interposed between the positive and negative electrodes. The electrode assembly 121EA may be either a jelly-roll type or a stack-type. The jelly-roll type electrode assembly 121EA may include a wound structure of the positive electrode, the negative electrode, and the separator interposed therebetween. The stack-type electrode assembly 121EA may include a plurality of positive electrodes, a plurality of negative electrodes, and a plurality of separators interposed therebetween, sequentially stacked.

In the stack-type electrode assembly 121EA, the plurality of positive electrodes and the plurality of negative electrodes may be arranged in the first direction D1. In the stack-type electrode assembly 121EA, the plurality of positive electrodes and the plurality of negative electrodes may be stacked in the first direction D1.

Each of the plurality of positive electrodes of the electrode assembly 121EA may include a positive electrode tab (not shown). The positive electrode tab (not shown) of each of the plurality of positive electrodes of the electrode assembly 121EA may be short-circuited with the positive terminal 121P. The positive electrode tab (not shown) of each of the plurality of positive electrodes of the electrode assembly 121EA may be welded to the positive terminal 121P.

Each of the plurality of negative electrodes of the electrode assembly 121EA may include a negative electrode tab 121NT. The negative electrode tab 121NT of each of the plurality of negative electrodes of the electrode assembly 121EA may be short-circuited with the negative terminal 121N. The negative electrode tab 121NT of each of the plurality of negative electrodes of the electrode assembly 121EA may be welded to the negative terminal 121N.

The case 121C may include an inner resin layer, a metal layer, and an outer resin layer. An adhesive and a corrosion-resistant layer may be further provided between the inner resin layer and the metal layer and between the outer resin layer and the metal layer.

The inner resin layer may have thermal adhesive properties and may be referred to as a sealant layer. The inner resin layer enables sealing of the case 121C. The inner resin layer may include, for example, a polyolefin-based resin such as polypropylene (PP) or polyethylene (PE). The metal layer may include any one of an alloy of iron, carbon, chromium and manganese, an alloy of iron, chromium and nickel, and aluminum. The metal layer may serve as a gas barrier. The metal layer may block the entry and exit of gas through the case 121C. The outer resin layer may serve as a surface protective layer. The outer resin layer may include a material with abrasion resistance and heat resistance, such as a nylon resin.

The case 121C may be provided by bonding a first case 121C1 and a second case 121C2. In this example, the first case 121C1 may be substantially flat. The first case 121C1 may not include an accommodating part. The second case 121C2 may include an accommodating part 121R. The accommodating part 121R may be formed by a pouch forming process. The accommodating part 121R is the portion of the second case 121C2 formed into a bowl shape for accommodating the electrode assembly 121EA.

A terrace 121T of the second case 121C2 may surround the accommodating part 121R. The terrace 121T of the second case 121C2 may be bonded to the edge of the first case 121C1, thereby providing the case 121C.

Insulating tape 121I may be applied on the positive terminal 121P and the negative terminal 121N. The positive terminal 121P and the negative terminal 121N may protrude to the outside of the case 121C. The positive terminal 121P and the negative terminal 121N may protrude from the case 121C in a third direction D3. Accordingly, the resulting voltage and current of the battery cell 121 may be output through the positive terminal 121P and the negative terminal 121N. The positive terminal 121P may be a positive lead. The negative terminal 121N may be a negative lead. The third direction D3 may cross the first direction D1 and the second direction D2.

The positive terminal 121P and the negative terminal 121N may be spaced apart in the third direction D3. The third direction D3 may be substantially parallel to each of the plurality of positive electrodes of the electrode assembly 121EA and each of the plurality of negative electrodes of the electrode assembly 121EA.

In embodiments, the adhesive layer 130 may include a material having elasticity. For example, the adhesive layer 130 may include a material having elasticity after curing. For example, the adhesive layer 130 may include a silicone-based resin. As the adhesive layer 130 includes a material having elasticity, the shape of the adhesive layer 130 may change under an external force.

In embodiments, the barrier pad 140 may increase in volume when temperature rises. For example, the barrier pad 140 may be configured to expand in volume when temperature rises, thereby increasing the distance between the plurality of battery cells 121_1~121_12.

In particular, since the barrier pad 140 and the plurality of battery cells 121_1~121_12 are disposed in contact with the elastic adhesive layer 130, the relative positions of the plurality of battery cells 121_1~121_12 may change when the barrier pad 140 expands in volume. For example, the force of the increased volume of the barrier pad 140 pushing the plurality of battery cells 121_1~121_12 away from each other may act as an external force on the adhesive layer 130, thereby changing the shape of the adhesive layer 130. For example, when the barrier pad 140 expands in the first direction D1, the adhesive layer 130 may also expand in the first direction D1.

This will be described in detail with reference to FIGS. 3 to 5 together.

As illustrated in FIG. 3, the first state may be a state in which the barrier pad 140 has not expanded. For example, the first state may be at the first temperature. The first temperature may be less than 90°C. For example, the first state may be a normal state.

In the first state at the first temperature, the adhesive layer 130 may include a first point P1 and a second point P2 arranged in the first direction D1. The first point P1 may overlap the fourth battery cell 121_4 in the second direction D2. The second point P2 may overlap the fifth battery cell 121_5 in the second direction D2. The first point P1 and the second point P2 may be spaced apart in the first direction D1.

In the first state at the first temperature, the distance in the first direction D1 between the first point P1 and the second point P2 may be L1. In the first state, the thickness of the barrier pad 140 in the first direction D1 between the fourth battery cell 121_4 and the fifth battery cell 121_5 may be a first thickness T1. In the first state, the distance between the fourth battery cell 121_4 and the fifth battery cell 121_5 may be approximately T1.

As illustrated in FIGS. 4 and 5, the second state may be a state in which the barrier pad 140 has expanded compared to the first state. For example, the second state may be at the second temperature. The second temperature may be higher than the first temperature. The second temperature may be equal to or greater than 90°C and equal to or less than 150°C. For example, the second state may be a thermal runaway state.

In the second state at the second temperature, the distance in the first direction D1 between the first point P1 and the second point P2 may be L2. L2 may be greater than L1. In the second state, the thickness of the barrier pad 140 in the first direction D1 between the fourth battery cell 121_4 and the fifth battery cell 121_5 may be a second thickness T2. The second thickness T2 may be greater than the first thickness T1. In the second state, the distance between the fourth battery cell 121_4 and the fifth battery cell 121_5 may be approximately T2.

Specifically, the thickness of the barrier pad 140 in the first direction D1 may increase as the temperature rises from the first temperature to the second temperature. For example, the thickness of the barrier pad 140 in the first direction D1 may increase from the first thickness T1 to the second thickness T2 as the temperature rises. In particular, since the adhesive layer 130 on which the fourth battery cell 121_4 and the fifth battery cell 121_5 are disposed has elasticity, the relative positions of the first point P1 and the second point P2 may change. For example, the distance between the first point P1 and the second point P2 may increase from L1 to L2. Accordingly, the distance between the fourth battery cell 121_4 and the fifth battery cell 121_5 may increase as the temperature rises from the first temperature to the second temperature. For example, the distance between the fourth battery cell 121_4 and the fifth battery cell 121_5 may increase from T1 to T2 as the temperature rises.

Since the battery cell assembly 120 according to embodiments of the present disclosure includes the barrier pad 140 disposed between the plurality of battery cells 121_1~121_12 and the elastic adhesive layer 130 disposed in contact therewith, the distance between the plurality of battery cells 121_1~121_12 can be increased when the temperature of the battery cell assembly 120 rises. This makes it possible to delay heat transfer between the plurality of battery cells 121_1~121_12.

Specifically, in a comparative example in which a non-elastic material is disposed below the plurality of battery cells 121_1~121_12, even if the volume of the barrier pad 140 increases, the relative positions of the plurality of battery cells 121_1~121_12 may be fixed, and the distance between the plurality of battery cells 121_1~121_12 may not increase.

Referring back to FIG. 1, the plurality of battery cells 121_1~121_12 may constitute a plurality of banks. For example, battery cells 121_1, 121_2, and 121_3 may be connected in parallel with each other, constituting a first bank. Battery cells 121_4, 121_5, and 121_6 may be connected in parallel with each other, constituting a second bank. Battery cells 121_7, 121_8, and 121_9 may be connected in parallel with each other, constituting a third bank. Battery cells 121_10, 121_11, and 121_12 may be connected in parallel with each other, constituting a fourth bank. The plurality of banks may be connected in series with each other.

The resulting connection configuration of the plurality of battery cells 121_1~121_12 may be referred to as 3-parallel-4-series (3P-4S); however, this is merely an example and does not limit the technical idea of the present disclosure in any way. The number of series-connected banks and the number of battery cells 121_1~121_12 included in the plurality of banks may be determined according to the magnitude of the voltage and current to be output from the battery cell assembly 120.

The battery cell assembly 120 may further include pads, a first integrated circuit assembly, a second integrated circuit assembly, and a flexible flat cable (FFC) assembly.
The pads may absorb swelling of the plurality of battery cells 121_1~121_12. Each of the pads may include polyurethane (PU). Each of the pads may include a fireproof material such as silicone.

The first integrated circuit assembly may include an insulating frame, an integrated circuit, busbars, sensing plates, sensing bars, temperature sensors, wiring, and an insulating cover. The second integrated circuit assembly may include an insulating frame, an integrated circuit, sensing plates, temperature sensors, wiring, and an insulating cover.

The first and second integrated circuit assemblies may include physical and functional components for providing electrical connections between the plurality of battery cells 121_1~121_12, outputting the resulting voltage of the plurality of battery cells 121_1~121_12, and measuring voltages (or currents) at nodes within the circuit formed by the plurality of battery cells 121_1~121_12.

The battery cell assembly 120 described with reference to FIGS. 1 to 5 may include the barrier pad 140 disposed between the plurality of battery cells 121_1~121_12 and the elastic adhesive layer 130 disposed in contact therewith. Accordingly, when the temperature of the battery cell assembly 120 rises due to a thermal runaway event or the like, the barrier pad 140 expands in volume, and the change in shape of the elastic adhesive layer 130 changes the relative positions of the plurality of battery cells 121_1~121_12. This increases the distance between the plurality of battery cells 121_1~121_12, thereby delaying heat transfer between the plurality of battery cells 121_1~121_12.

According to embodiments of the present disclosure, a battery cell assembly 120 with improved performance and reliability can be provided.

According to embodiments of the present disclosure, a battery cell assembly 120 with enhanced safety can be provided.

### (Second embodiment)

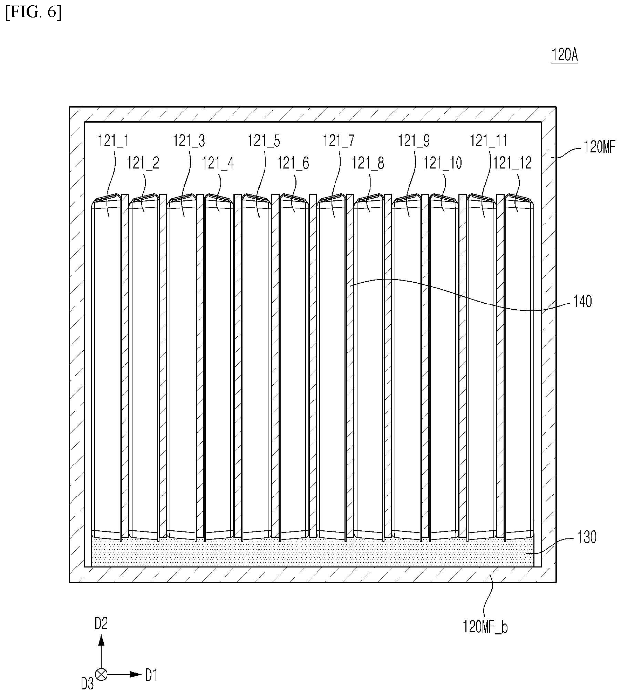

FIG. 6 is a diagram for explaining a battery cell assembly 120A according to exemplary embodiments of the present disclosure. Hereinafter, description will focus on differences from the battery cell assembly 120 described with reference to FIGS. 1 to 5.

Referring to FIG. 6, in the battery cell assembly 120A, the plurality of battery cells 121_1~121_12 may be covered by a frame 120MF. The frame 120MF may be a unitary frame. The frame 120MF may include an opening for insertion of the plurality of battery cells 121_1~121_12, and accordingly, the cross-sectional shape of the frame 120MF may be a hollow rectangle. The frame 120MF may have an accommodating space therein. The plurality of battery cells 121_1~121_12 may be accommodated in the accommodating space. The frame 120MF may include a metal such as aluminum or stainless steel, and may protect the plurality of battery cells 121_1~121_12.

The battery cell assembly 120A may further include a first integrated circuit assembly, a second integrated circuit assembly, and a flexible flat cable (FFC) assembly.

The first integrated circuit assembly may include an insulating frame, an integrated circuit, busbars, sensing plates, sensing bars, temperature sensors, wiring, and an insulating cover. The second integrated circuit assembly may include an insulating frame, an integrated circuit, sensing plates, temperature sensors, wiring, and an insulating cover.

The first and second integrated circuit assemblies may include physical and functional components for providing electrical connections between the plurality of battery cells 121_1~121_12, outputting the resulting voltage of the plurality of battery cells 121_1~121_12, and measuring voltages (or currents) at nodes within the circuit formed by the plurality of battery cells 121_1~121_12.

The insulating frame may include an insulating material such as plastic. The insulating frame may cover the front of the plurality of battery cells 121_1~121_12. The insulating frame may support the integrated circuit, busbars, sensing plates, sensing bars, temperature sensors, and wiring.

The busbars may electrically connect the plurality of battery cells 121_1~121_12. The busbars may be fixed to the insulating frame.

The integrated circuit may be mounted on the insulating frame. The integrated circuit may be configured to measure the voltages at the plurality of nodes of the plurality of battery cells 121_1~121_12 through the sensing plates and sensing bars.

The sensing bars may include a conductive material. The sensing bars may have a rod shape. The sensing bars may be short-circuited with the busbars. The sensing bars may be coupled to the busbars. Through the sensing bars, the voltages of the busbars can be measured.

Each of the plurality of sensing plates may have a patch shape or a pad shape. The plurality of sensing plates may include a conductive material. The plurality of sensing plates may be short-circuited with corresponding ones of the positive terminals 121P (see FIG. 2) and negative terminals 121N (see FIG. 2) of the plurality of battery cells 121_1~121_12.

Each of the plurality of sensing plates may be connected to the integrated circuit. Through the plurality of sensing plates, the voltages at the plurality of nodes inside the battery cell assembly 120A can be measured.

The temperature sensors may be configured to measure the temperatures at a plurality of points in the battery cell assembly 120A. The temperature sensors may be spatially arranged, and accordingly, the temperature distribution within the battery cell assembly 120A can be measured.

The insulating cover may include an insulating material such as plastic. The insulating cover may be fitted to the insulating frame. The insulating cover may cover the integrated circuit, busbars, sensing plates, sensing bars, and temperature sensors, thereby protecting the electrical elements of the first and second integrated circuit assemblies.

The frame 120MF may include a bottom part 120MF_b. The bottom part 120MF_b is the portion of the frame 120MF on which the plurality of battery cells 121_1~121_12 are disposed. Specifically, the bottom part 120MF_b may overlap with the plurality of battery cells 121_1~121_12 in the second direction D2. The adhesive layer 130 may be disposed between the bottom part 120MF_b and the plurality of battery cells 121_1~121_12.

The battery cell assembly 120A described with reference to FIG. 6 may include the barrier pad 140 disposed between the plurality of battery cells 121_1~121_12 and the elastic adhesive layer 130 disposed in contact therewith. Accordingly, when the temperature of the battery cell assembly 120A rises, the distance between the plurality of battery cells 121_1~121_12 is increased, thereby delaying heat transfer between the plurality of battery cells 121_1~121_12.

According to embodiments of the present disclosure, a battery cell assembly 120A with improved performance and reliability can be provided.

According to embodiments of the present disclosure, a battery cell assembly 120A with enhanced safety can be provided.

### (Third embodiment)

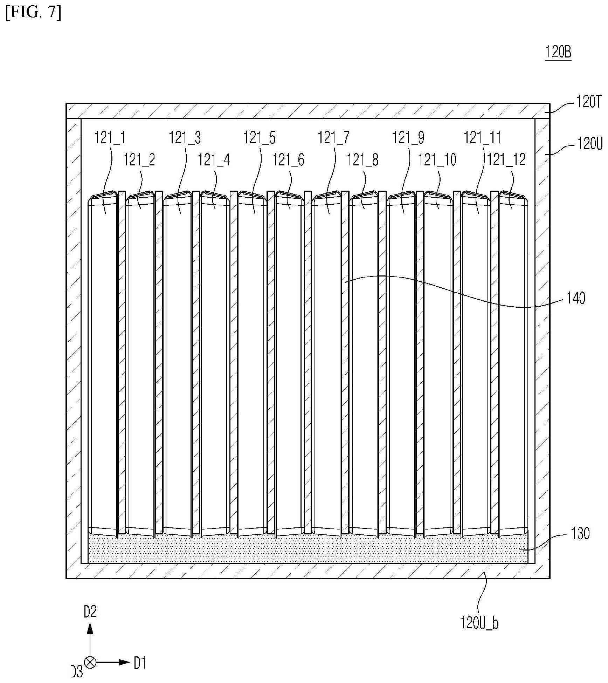

FIG. 7 is a diagram for explaining a battery cell assembly 120B according to exemplary embodiments of the present disclosure. Hereinafter, description will focus on differences from the battery cell assembly 120 described with reference to FIGS. 1 to 5.

Referring to FIG. 7, the plurality of battery cells 121_1~121_12 may be accommodated in a lower case 120U. The plurality of battery cells 121_1~121_12 may be arranged in the first direction D1 within the lower case 120U. The plurality of battery cells 121_1~121_12 may be covered by the lower case 120U and an upper case 120T.

The lower case 120U may have a U-shaped cross-sectional profile. Accordingly, the lower case 120U may have a relatively wide opening, enabling the plurality of battery cells 121_1~121_12 to be easily inserted into the lower case 120U. The lower case 120U may be, for example, a U-frame. The lower case 120U and the upper case 120T may be coupled by a method such as butt welding. The lower case 120U and the upper case 120T may include a metal such as aluminum or stainless steel, and may protect the plurality of battery cells 121_1~121_12.

The lower case 120U may include a bottom part 120U_b. The bottom part 120U_b is the portion of the lower case 120U on which the plurality of battery cells 121_1~121_12 are disposed. Specifically, the bottom part 120U_b may overlap with the plurality of battery cells 121_1~121_12 in the second direction D2. The adhesive layer 130 may be disposed between the bottom part 120U_b and the plurality of battery cells 121_1~121_12.

The battery cell assembly 120B described with reference to FIG. 7 may include the barrier pad 140 disposed between the plurality of battery cells 121_1~121_12 and the elastic adhesive layer 130 disposed in contact therewith. Accordingly, when the temperature of the battery cell assembly 120B rises, the distance between the plurality of battery cells 121_1~121_12 is increased, thereby delaying heat transfer between the plurality of battery cells 121_1~121_12.

According to embodiments of the present disclosure, a battery cell assembly 120B with improved performance and reliability can be provided.

According to embodiments of the present disclosure, a battery cell assembly 120B with enhanced safety can be provided.

### (Fourth embodiment)

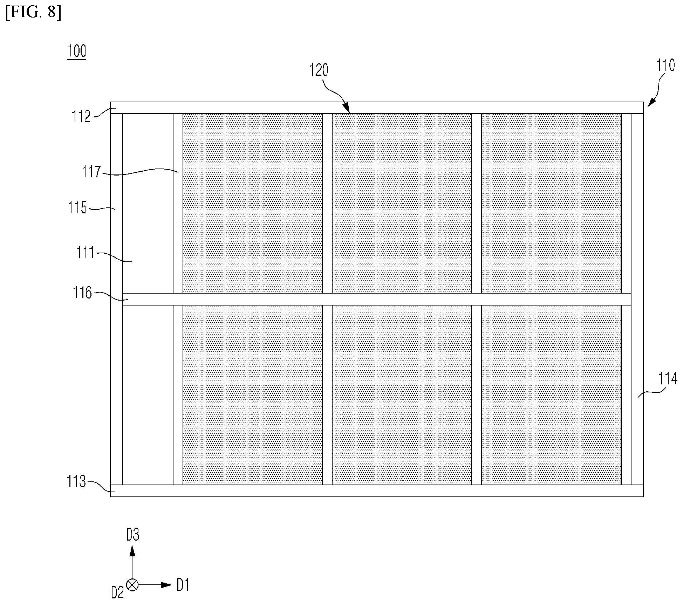

FIG. 8 is a diagram of a battery pack 100 according to exemplary embodiments of the present disclosure.

Referring to FIG. 8, the battery pack 100 may include a pack housing 110 and a plurality of battery cell assemblies 120. The battery pack 100 may be a final product mounted in an application such as a vehicle. The battery cell assembly 120 may be the battery cell assembly 120, 120A, or 120B described with reference to FIGS. 1 to 7.

The pack housing 110 may provide a space in which the battery cell assemblies 120 are mounted. The pack housing 110 may include a base plate 111, sidewalls 112, 113, 114, 115, a center beam 116, and cross beams 117.

Here, the first direction D1 and the third direction D3 may be substantially parallel to the mounting surface of the base plate 111 (i.e., the surface facing the battery cell assembly 120), and the second direction D2 may be substantially perpendicular to the mounting surface of the base plate 111.

Each of the base plate 111 and the sidewalls 112, 113 may be provided by an extrusion process. The extrusion direction of each of the base plate 111 and the sidewalls 112, 113 may be the first direction D1. The sidewalls 114, 115 may also be provided by an extrusion process. The sidewalls 112, 113, 114, 115 may be substantially perpendicular to the base plate 111.

According to exemplary embodiments, the base plate 111 and the sidewalls 112, 113 may be coupled by friction stir welding. The base plate 111 may include a plurality of unit plates coupled by friction stir welding.

The center beam 116 may extend in the first direction D1. The center beam 116 may be interposed between the sidewalls 112, 113. The center beam 116 may be included in a center plate that is one of the plurality of unit plates coupled by friction stir welding. Accordingly, the center beam 116 may be formed together with the center plate, and the center beam 116 may be an element continuous and integral with the center plate.

The cross beams 117 may extend in the third direction D3. The cross beams 117 may be interposed between the sidewalls 114, 115.

The base plate 111 may include a plurality of cooling channels. The plurality of cooling channels may provide passages for movement of a coolant such as water. The plurality of cooling channels may be formed by an extrusion process. The plurality of cooling channels may extend in the first direction D1. The plurality of cooling channels may be spaced apart in the third direction D3.

The plurality of battery cell assemblies 120 may be disposed on the base plate 111 of the pack housing 110. The base plate 111 may support the plurality of battery cell assemblies 120. The sidewalls 112, 113, 114, 115 may horizontally surround the plurality of battery cell assemblies 120. The sidewalls 112, 113, 114, 115 may protect the plurality of battery cell assemblies 120. The plurality of battery cell assemblies 120 may be disposed in a space defined by the cross beams 117 on the base plate 111.

The battery pack 100 may further include a pack lid coupled to the sidewalls 112, 113, 114, 115 of the pack housing 110. The pack lid may cover elements mounted inside the battery pack 100, such as the plurality of battery cell assemblies 120 and electrical components. The pack lid may be fixed to the pack housing 110 by a mechanical coupling means such as bolting.

In FIG. 8, the arrangement of the plurality of battery cell assemblies 120 may be described as a 3 * 2 layout. The arrangement of the plurality of battery cell assemblies 120 disclosed in FIG. 8 is a non-limiting example and does not limit the technical idea of the present disclosure in any way. Those skilled in the art will readily be able to arrive at M * N arrangements (where M and N are each integers of 2 or more) of the plurality of battery cell assemblies 120 based on what is described herein.

The battery pack 100 may further include a Battery Management System (BMS). The BMS may be configured to perform monitoring, balancing, and control of the battery pack 100. The monitoring of the battery pack 100 may include measuring voltages and currents at specific nodes within the plurality of battery cell assemblies 120 and measuring temperatures at set locations within the battery pack 100. The battery pack 100 may include meters for measuring the aforementioned voltages, currents, and temperatures.

The balancing of the battery pack 100 is an operation to reduce deviations among the plurality of battery cell assemblies 120. The control of the battery pack 100 includes preventing overcharging, overdischarging, and overcurrent. Through monitoring, balancing, and control, the battery pack 100 can operate under optimal conditions, thereby preventing the shortening of the lifespan of each of the plurality of battery cell assemblies 120.

The battery pack 100 may further include additional electrical components such as a cooling device, a power relay assembly (PRA), and a safety plug. The cooling device may include a cooling fan. The cooling fan may prevent overheating of each of the plurality of battery cell assemblies 120 by circulating air inside the battery pack 100. The PRA may be configured to supply or cut off power from the high-voltage battery to an external load (e.g., the motor of a vehicle). The PRA may protect the plurality of battery cell assemblies 120 and the external load (e.g., the motor of a vehicle) by cutting off the power supply to the external load (e.g., the motor of a vehicle) when an abnormal voltage such as a voltage surge occurs. The additional electrical components may be interposed between the plurality of battery cell assemblies 120 and the sidewall 115. The space between the battery cell assemblies 120 and the sidewall 115 may also be referred to as an electrical component mounting area.

The battery pack 100 may further include a plurality of inter-busbars configured to electrically connect the plurality of battery cell assemblies 120. The plurality of battery cell assemblies 120 may be connected in series by the plurality of inter-busbars. Accordingly, the battery pack 100 may be configured to output a high voltage to an external load (e.g., the motor of a vehicle).

The battery pack 100 according to embodiments of the present disclosure may include battery cell assemblies 120, each including a barrier pad 140 disposed between a plurality of battery cells 121_1~121_12 and an elastic adhesive layer 130 disposed in contact therewith. Accordingly, the safety of the battery pack 100 including the battery cell assembly 120 is enhanced, and performance and reliability can be improved.

According to embodiments of the present disclosure, a battery pack 100 with improved performance and reliability can be provided.

According to embodiments of the present disclosure, a battery pack 100 with enhanced safety can be provided.

The present disclosure has been described in more detail above with reference to the drawings and embodiments. However, it is to be understood that the configurations shown in the drawings or embodiments described herein are only one embodiment of the disclosure and do not represent all of the technical ideas of the disclosure, and that there may be various equivalents and modifications that may be substituted for them at the time of filing the present application.

## Claims

1. A battery cell assembly comprising:
a plurality of battery cells;
a barrier pad between the plurality of battery cells; and
an adhesive layer in contact with the barrier pad below the plurality of battery cells, wherein
the adhesive layer is configured to increase a distance between the plurality of battery cells when temperature rises from a first temperature to a second temperature higher than the first temperature.

2. The battery cell assembly of claim 1, wherein
the barrier pad is configured to expand in volume when the temperature rises from the first temperature to the second temperature, thereby increasing the distance between the plurality of battery cells.

3. The battery cell assembly of claim 2, wherein
as the barrier pad expands in volume, the adhesive layer in contact therewith is also configured to expand.

4. The battery cell assembly of claim 1, wherein
the adhesive layer has elasticity such that its shape changes under an external force.

5. The battery cell assembly of claim 4, wherein
the adhesive layer is a silicone-based resin.

6. The battery cell assembly of claim 1, wherein
the plurality of battery cells comprises a first battery cell and a second battery cell arranged in a first direction,
the adhesive layer comprises a first point overlapping the first battery cell in a second direction crossing the first direction, and a second point overlapping the second battery cell in the second direction,
the battery cell assembly has a first distance in the first direction between the first point and the second point at the first temperature,
the battery cell assembly has a second distance in the first direction between the first point and the second point at the second temperature, and
the second distance is greater than the first distance.

7. The battery cell assembly of claim 1, wherein
the plurality of battery cells comprises a first battery cell and a second battery cell arranged in a first direction,
the barrier pad is disposed between the first battery cell and the second battery cell, and
a first thickness of the barrier pad in the first direction at the first temperature is less than a second thickness thereof in the first direction at the second temperature.

8. The battery cell assembly of claim 1, wherein
the first temperature is less than 90°C, and
the second temperature is equal to or greater than 90°C and equal to or less than 150°C.

9. A battery cell assembly comprising:
a case for accommodating a plurality of battery cells therein;
the plurality of battery cells on a bottom part of the case;
a barrier pad between the plurality of battery cells; and
an adhesive layer between the plurality of battery cells and the bottom part, wherein
the adhesive layer has elasticity such that its shape changes under an external force.

10. The battery cell assembly of claim 9, wherein
the adhesive layer is configured to expand in volume when temperature rises, thereby increasing a distance between the plurality of battery cells.

11. The battery cell assembly of claim 9, wherein
the barrier pad is configured to expand in volume when temperature rises, increasing a distance between the plurality of battery cells, and
as the barrier pad expands in volume, the adhesive layer in contact therewith is also configured to expand.
